# EUROPEAN PATENT APPLICATION

(11) **EP 3 199 685 A1**
(43) Date of publication of application: **02.08.2017**
(21) Application number: 14902524.9
(22) Date of filing: 17.11.2014
(51) Int. Cl.: D06F 33/02

(54) **APPLIANCE OPERATING INTERFACE DISPLAY METHOD AND WASHING MACHINE CONTROL METHOD**

(30) Priority: 23.09.2014 CN 201410491565
(71) Applicant: Qingdao Haier Washing Machine Co. Ltd., Qingdao, Shandong 266101 (CN)
(72) Inventor: LV, Peishi, Qingdao Shandong 266101 (CN); GAO, Qiuying, Qingdao Shandong 266101 (CN); TIAN, Ying, Qingdao Shandong 266101 (CN); WANG, Xiaowei, Qingdao Shandong 266101 (CN)
(74) Representative: HGF Limited
(86) International application number: PCT/CN2014/091308
(87) International publication number: WO 2016/045180

(57) **Abstract**

A display method of an operation interface of an electrical appliance and a control method of a washing machine are provided. The electrical appliance has a human-computer interaction interface including at least two function interfaces that can be selected externally. The method includes: S10, recording a use frequency of each function interface; S20, adjusting a display ranking manner of the human-computer interaction interface automatically, so that the function interface with the highest use frequency is preferentially displayed when the human-computer interaction interface is restarted. A computer controller of the washing machine collects using situations, washing data of all function interfaces, saves the using situations, the washing data in a data storage unit, calculates the stored data, analyzes the use frequencies of the function interfaces when the method is applied to the washing machine. The function interface with the highest use frequency is preferentially displayed when the washing machine is reused by a user. Therefore, the time used by the user for selecting washing modes is saved, and the operation is simple.

## Description

The present application claims priority to a Chinese Patent application No. 201410491565.4, filed with the State Intellectual Property Office of China on September 23, 2014 by Qingdao Haier Washing Machine Co., Ltd., entitled 'Display method of an operation interface of an electrical appliance and a control method of a washing machine', disclosure of which is incorporated herein by reference in its entirety.

### TECHNICAL FIELD

The present disclosure relates to the field of program display of an electrical appliance, and in particular relates to a display method of an operation interface of an electrical appliance and a control method of a washing machine.

### BACKGROUND

In the existing art, display interfaces of most of household electrical appliances are constant. Washing modes cannot be automatically ranked according to user preferences, that is, the washing modes used frequently by a user are mixed with the washing modes used infrequently without a sequence.

In particular to a washing machine, the display interface is constant when clothes are washed, thus washing modes cannot be automatically ranked according to user preferences. As a result, the washing modes used frequently by the user are mixed with the washing modes used infrequently without a sequence. Moreover, the washing machine involves various kinds of washing modes. Therefore, an arrangement of the washing modes is more disordered. Additionally, the existing washing machine has a constant default value of a self-compiled program, thus previous washing data cannot be collected, and the default value of the self-compiled program cannot be changed correspondingly according to the previous washing data of the user.

The following operation steps are performed when a full-automatic washing machine is used to wash the clothes by the user: firstly, a power plug is plugged into a socket, the clothes required to be washed are put in a washing drum, and a power button is pressed; subsequently, a water supplying program, a washing program, a rinsing program, a water draining program and a spinning program are sequentially set, or a drying program is also set. Since many contents are required to be set, such as the amount of water supplying, washing time, washing intensity, adding amount of detergents, rinsing frequency and the like, the setting process is very troublesome, thereby increasing difficulty for using the washing machine and the time for selecting programs. Moreover, the programs can only be set by a subjective judgment with respect to quantity of the clothes and smudginess degree. However, since the subjective judgment may be inaccurate with respect to the smudginess degree of the clothes, the waste of energy is easily caused.

Based on the above descriptions, a display method with a novel operation interface of an electrical appliance is urgently needed, so as to solve the following problems in the existing art: the electrical appliance is difficult to used and the time for selecting modes is long, and the waste of energy is easily caused.

### SUMMARY

In view of this, the present disclosure aims to provide a display method of an operation interface of an electrical appliance. The display method saves the user's time used for selecting use modes, the operation of which is simple, avoids the waste of energy and reduces the difficulty for using the electrical appliance.

The present disclosure further aims to provide a control method of a washing machine. The method saves the user's time used for selecting washing modes, the operation of which is simple, avoids the waste of energy and reduces the difficulty for using the washing machine.

Embodiments of the present disclosure adopt the following technical solution.

A display method of an operation interface of an electrical appliance, the electrical appliance having a human-computer interaction interface which includes at least two function interfaces that can be selected externally, the method including the following steps:
recording a use frequency of each of the function interfaces (S10); and
adjusting a ranking manner for displaying the human-computer interaction interface automatically, and preferentially displaying the function interface with the highest use frequency when the human-computer interaction interface is restarted (S20).

Preferably, the preferentially displaying means that the function interface with the highest use frequency is displayed as a starting interface of the human-computer interaction interface.

Preferably, the preferentially displaying means that the function interface with the highest use frequency is displayed in a first place and/or highlighted as a starting interface of the human-computer interaction interface when a plurality of function interfaces are displayed on the human-computer interaction interface.

Preferably, the plurality of function interfaces are displayed in the human-computer interaction interface according to a descending order of the use frequencies.

Preferably, the display method of the operation interface of the electrical appliance further includes: selecting values of operating parameters in the function interfaces, making a statistics on a use frequency of a parameter value of each of the parameters, and preferentially displaying the parameter value with the highest use frequency in the operating parameters when the function interface is displayed.

A control method of a washing machine includes any of the above display method of the operation interface of the electrical appliance, where the function interfaces include: one or more of a washing interface, a rinsing interface, a spinning interface or a drying interface.

Preferably, the parameters are selected from time, water levels and water temperature.

The technical solution proposed by embodiments of the present disclosure has the following beneficial effects:
(1) according to the display method of the operation interface of the electrical appliance provided by the present application, the use frequency of each function interface can be recorded, and the ranking manner for displaying the human-computer interaction interface can be adjusted, so that the function interface with the highest use frequency is preferentially displayed when the human-computer interaction interface is restarted. Especially, when the method is applied to the washing machine, a computer controller of the washing machine collects using situations and washing data of all the function interfaces, saves the using situations and the washing data in a data storage unit, calculates the stored data and analyzes the use frequencies of the function interfaces; and the function interface with the highest use frequency can be preferentially displayed when the washing machine is reused by the user. Therefore, the time used by the user for selecting the washing modes is saved, the operation is simple, and the waste of energy is avoided; and
(2) when the method of the present disclosure is applied to the washing machine, specific parameter values (time, water levels and/or water temperature and the like) can be selected in the function interfaces, a statistics regarding the use frequency of each parameter value is made, and the parameter value with the highest use frequency in the operating parameters can be preferentially displayed when the function interface is displayed. Therefore, the method also includes: learning the parameter values set by a self-compiled program and displaying the parameter value with the high use frequency by default.

### BRIEF DESCRIPTION OF DRAWING

In order to illustrate the technical solution in embodiments of the present disclosure more clearly, a drawing required to be used in the description of embodiments of the present disclosure is simply introduced below. It is apparent that the drawing in the following description only belongs to some embodiments of the present disclosure, and those ordinary skilled in the art may also obtain other drawings according to the contents and the drawing of embodiments of the present disclosure without paying any creative work.

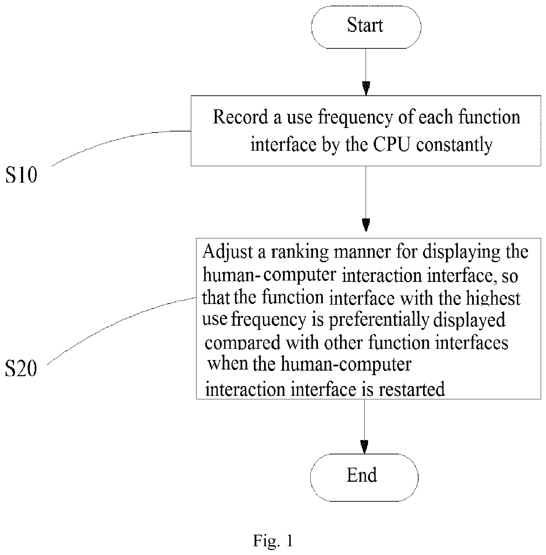

Fig. 1 is a flow chart illustrating a display method of an operation interface of a washing machine provided by the present application.

### DETAILED DESCRIPTION

In order to make the technical problem to be solved by the present disclosure, the adopted technical solution and the achieved technical effects clearer, the technical solution of embodiments of the present disclosure is further described in detail below in combination with the drawing. Apparently, embodiments described are only part of embodiments of the present disclosure, rather than all embodiments. Based on embodiments in the present disclosure, all other embodiments obtained by those skilled in the art without paying creative work shall belong to the protection scope of the present disclosure.

A display method of an operation interface provided by the present application can be applied to all electrical appliances with an operation interface. Each of the electrical appliances is provided with a Central Processing Unit (CPU) and a data storage unit, and has a human-computer interaction interface. The human-computer interaction interface includes at least two function interfaces that can be selected externally. Each function interface has at least one secondary interface which is relevant to the function interface and can be reached by selecting the function interface. As shown in Fig. 1, the flow of the method includes the following steps: S10, in which a use frequency of each function interface is constantly recorded by the CPU; and S20, in which a ranking manner for displaying the human-computer interaction interface is adjusted, so that the function interface with the highest use frequency can be preferentially displayed when the human-computer interaction interface is restarted. In the method, a statistics regarding the use frequency of each function interface within a preset time period is constantly made by the CPU. Therefore, the function interface ranked in a first place in a result of the statistics before the electrical appliance is activated every time, is not fixed. The displayed function interfaces ranked in the first place, at two successive activations, are possibly the same or different. The preset time period may be a week, a month, a quarter and the like, and is specifically set according to the actual using situation.

A washing machine is taken as an example below to describe the display method of the operation interface in detail.

Before the washing machine is used, a washing mode is required to be selected to determine the washing manner required by current washing. The washing mode includes: a washing mode including a series of processes such as a water supplying process, a washing process, a spinning process, a drying process and the like; a washing mode including the drying process and the spinning process; and a washing mode only including the drying process or only including the spinning process, and the like. The washing process further includes various washing programs, such as a chemical fiber fabric program, a standard washing program, a wool fabric program, a weak washing program, or a cotton fabric program and the like. In daily household washing, except for dirty, heavy fabrics and valuable or vulnerable fabrics, various fabrics are put together for washing rather than being sorted. At this time, the chemical fiber fabric program or the standard washing program should be selected. The wool fabric program or the weak washing program is selected when various flimsy fabrics that are not very dirty are washed in summer. The cotton fabric program is necessarily selected only when various dirty and heavy fabrics are washed. The chemical fiber fabric program or the standard washing program may also be selected when dirty woolen braided fabrics are washed.

The washing modes as the function interfaces are displayed on the human-computer interaction interface. The chemical fiber fabric program, the standard washing program, the wool fabric program, the weak washing program, or the cotton fabric program and the like as secondary interfaces relevant to the function interfaces are displayed on the human-computer interaction interface. Each secondary interface further includes one-level or multi-level secondary interfaces of the next level directly or indirectly relevant to the secondary interface.

The specific working process is as follows: a statistics regarding the use frequency of all the secondary interfaces subordinate to each function interface within a preset time period is made by the CPU according to historical washing parameter values stored in the data storage unit, and the use frequency of all the relevant secondary interfaces subordinate to each function interface within the preset time period is taken as the use frequency of the function interface within the preset time period; and all the function interfaces are ranked according to the use frequency in a descending order, and the function interface with the highest use frequency within the preset time period is preferentially displayed when the human-computer interaction interface is restarted. For example, if the statistics result indicates that the washing mode including a series of processes such as the water supplying process, the washing process, the spinning process, the drying process and the like has the highest use frequency within the preset time period, the function interface corresponding to the washing mode is preferentially displayed on the human-computer interaction interface when the human-computer interaction interface is restarted.

Therefore, through the method, the time of the user used for selecting the washing modes is saved, the operation is simple, and the waste of energy is avoided.

In the present embodiment, as a further preferred solution, a plurality of function interfaces are displayed in the human-computer interaction interface in a manner of being ranked in a descending order of the use frequency within the preset time period. Specifically, the CPU also ranks each function interface. Specifically, the function interfaces are sequentially ranked according to the use frequency of all the secondary interfaces subordinate to each function interface with the preset time period, the use frequency of all the secondary interfaces subordinate to the function interface ranked in (N+1)th place within the preset time period is higher than that of all the secondary interfaces subordinate to the function interface ranked in Nth place within the preset time period, where N is an integer which is equal to or greater than 1.

Through the method, the use frequencies of the washing modes corresponding to the function interfaces are more accurately ranked, so that the user can conveniently find the function interface corresponding to the washing mode required to be selected when the washing mode corresponding to the function interface ranked in the first place is not required to be selected. Therefore, the time used for selecting for the washing modes by the user is further saved, and the operation is simple.

Since each function interface is relevant to at least one-level secondary interfaces, after a certain function interface is opened, there may be a plurality of secondary interfaces in the same level in the function interface. A certain time is also spent on selecting the secondary interfaces in this level. Therefore, it is necessary to rank a display sequence of the secondary interfaces.

In the present embodiment, the display sequence of the secondary interfaces is ranked by the following preferred solution, in which a statistics regarding the use frequencies of all the secondary interfaces subordinate to each function interface within the preset time period is made by the CPU, and the secondary interface with the highest use frequency within the preset time period is preferentially displayed when the washing machine is restarted next time. For example, the secondary interface corresponding to the standard washing program is preferentially displayed when the washing machine is restarted next time if a result of the statistics indicates that the standard washing program has the highest use frequency within the preset time period. When the corresponding function interface is opened to enter the secondary interface, the secondary interface corresponding to the standard washing program is preferentially displayed.

In a similar way, a method of displaying and ranking the secondary interfaces relevant to other function interfaces is the same as the above method.

According to the preferred solution, the statistics is made regarding every level of secondary interfaces subordinate to each function interface, and the secondary interface with the highest use frequency subordinate to each function interface within the preset time period is preferentially displayed. As a result, the selection of the user for the secondary interfaces is further facilitated, the difficulty of selecting the secondary interfaces by the user is reduced and the time for selecting the secondary interfaces is saved.

Similar to the displaying and ranking process of the function interfaces, the present disclosure further ranks every level of secondary interfaces subordinate to each function interface. In the present embodiment, as a further preferred solution, the secondary interfaces are sequentially ranked according to the use frequency of all the secondary interfaces subordinate to each function interface within the preset time period, and the use frequency of the secondary interface ranked in (M+1)th place within the preset time period is greater than that of the secondary interface ranked in Mth place within the preset time period, where M is an integer which is equal to or greater than 1. For example, if the use frequency of the standard washing program within the preset time period is ranked in a first place, the use frequency of the chemical fiber fabric program within the preset time period is ranked in a second place, the use frequency of the woolen fabric program within the preset time period is ranked in a third place, and the use frequency of the weak washing program or the cotton fabric program within the preset time period is ranked in a last place, when the corresponding function interface is opened after the washing machine being restarted next time, the standard washing program is displayed in the first place, the chemical fiber fabric program is displayed in the second place, the woolen fabric program is displayed in the third place, and the weak washing program or the cotton fabric program is displayed in the fourth (last) place.

In the function interfaces, the values of the operating parameters can be selected, a statistics regarding the using frequency of each parameter value is made. The parameter value with the highest use frequency in the operating parameters is preferentially displayed when the function interface is displayed. Since the washing programs corresponding to at least a part of secondary interfaces are self-compiled programs, a statistics regarding the use frequencies of the operating parameters in each self-compiled program within the preset time period is also made by the CPU, and the operating parameter with the highest use frequency within the preset time period in each self-compiled program is ranked in the first place, where the operating parameters generally include the time, water levels, the water quality, the temperature of washing water, using habits of the user and the like. The CPU collects and analyzes the time, the water levels, the water quality, the temperature of washing water and the using habits of the user in the previous use of the washing machine so as to make a statistics, and parameters such as the water flow, the amount of detergents, the washing time, the water level, the water flow speed and the like used most frequently by the user are obtained based on the above factors. As a result, such parameters are preferentially displayed by default when the washing machine is restarted next time.

In the present embodiment, as a preferred solution, the preferable display means that the function interface with the highest use frequency is displayed as a starting interface of the human-computer interaction interface. Specifically, in the case that a statistics regarding the ranking of the function interfaces is made by the CPU, the function interface ranked in the first place is displayed on the human-computer interaction interface as a starting interface when the washing machine is restarted next time. That is, only the function interface ranked in the first place is displayed on the human-computer interaction interface when the human-computer interaction interface is restarted next time, and the function interfaces behind the function interface ranked in the first place are displayed on the human-computer interaction interface in sequence when the human-computer interaction interface is slid backward. The function interfaces displayed on the human-computer interaction interface are changed at every sliding of the human-computer interaction interface, and only one function interface is displayed on the human-computer interaction interface for every time.

For example, the function interface ranked in the first place is displayed on the human-computer interaction interface when the human-computer interaction interface is started. However, the function interface ranked in the second place is displayed on the human-computer interaction interface when the human-computer interaction interface is slid in a fixed direction. The function interface ranked in the third place is displayed on the human-computer interaction interface when the human-computer interaction interface is slid again in the fixed direction, and so forth, until all the function interfaces are displayed on the human-computer interaction interface.

When a certain function interface is clicked on the human-computer interaction interface, a secondary interface ranked in the first place of a certain function interface appears on the human-computer interaction interface. Similarly, a secondary interface ranked in the second place is displayed on the human-computer interaction interface when the human-computer interaction interface is slid again in a fixed direction, and so forth, until all the secondary interfaces are displayed on the human-computer interaction interface.

In the present embodiment, when a plurality of function interfaces are displayed on the human-computer interaction interface, preferentially displaying means that the function interface with the highest use frequency is displayed at a first place or highlight as a starting interface of the human-computer interaction interface. Specifically, the method is as follows: the human-computer interaction interface is divided into a plurality of areas, all the function interfaces are simultaneously displayed in the plurality of areas of the human-computer interaction interface in sequence, and the function interface ranked in the first place is displayed in the first place and/or highlighted as the starting interface of the human-computer interaction interface.

For example, the human-computer interaction interface is divided into a plurality of areas. If the ranking sequence is: the standard washing program, the chemical fiber fabric program, the woolen fabric program, the weak washing program and the cotton fabric program, where the standard washing program is ranked in the first place, and the cotton fabric program is ranked in the last place, then the standard washing program is displayed at the first place and/or the highlighted as the starting interface of the human-computer interaction interface. The chemical fiber fabric program, the woolen fabric program, the weak washing program and the cotton fabric program are also displayed on the display interface in the above ranking sequence from front to back.

The principle of applying the method in other electrical appliances is the same as that of applying the method in the washing machine, which is not repeated again.

It should be noted that, the above contents are only better embodiments and technical principles applied by the present disclosure. Those skilled in the art should understand that the present disclosure is not limited to specific embodiments described herein, and those skilled in the art can make various obvious changes, readjustments and replacements without departing from the protection scope of the present disclosure. Therefore, although the present disclosure is described in detail through above embodiments, the present disclosure is not limited to above embodiments. The present disclosure may include more other equivalent embodiments without departing from the concept of the present disclosure, and the scope of the present disclosure is determined by the scope of the claims attached.

## Claims

1. A display method of an operation interface of an electrical appliance, the electrical appliance having a human-computer interaction interface which includes at least two function interfaces that can be selected externally, the method comprising the following steps:
recording a use frequency of each of the function interfaces (S10); and
adjusting a ranking manner for displaying the human-computer interaction interface automatically, and preferentially displaying the function interface with the highest use frequency when the human-computer interaction interface is restarted (S20).

2. The display method of an operation interface of an electrical appliance according to claim 1, wherein the preferentially displaying means that the function interface with the highest use frequency is displayed as a starting interface of the human-computer interaction interface.

3. The display method of an operation interface of an electrical appliance according to claim 1, wherein the preferentially displaying means that the function interface with the highest use frequency is displayed in a first place and/or highlighted as a starting interface of the human-computer interaction interface when a plurality of function interfaces are simultaneously displayed on the human-computer interaction interface.

4. The display method of an operation interface of an electrical appliance according to claim 3, wherein the plurality of function interfaces are displayed in the human-computer interaction interface according to a descending order of the use frequencies.

5. The display method of an operation interface of an electrical appliance according to any of claims 1-4, further comprising: selecting values of operating parameters in the function interfaces, making a statistics on a use frequency of a parameter value of each of the parameters, and preferentially displaying the parameter value with the highest use frequency in the operating parameters when the function interface is displayed.

6. A control method of a washing machine, comprising the display method of an operation interface of an electrical appliance according to any of claims 1-5, wherein the function interfaces comprise at least one of a washing interface, a rinsing interface, a spinning interface or a drying interface.

7. The control method of the washing machine according to claim 6, wherein the parameters are selected from one of the followings: time, water levels and water temperature.
